# EUROPEAN PATENT APPLICATION

(11) **EP 4 734 412 A1**
(43) Date of publication of application: **29.04.2026**
(21) Application number: 25208177.3
(22) Date of filing: 13.10.2025
(51) Int. Cl.: H04L 1/00, H04L 5/00, H04L 5/14, H04L 27/00

(54) **COMMUNICATING WITH AN ARBITRARY WAVEFORM IN A WIRELESS COMMUNICATION SYSTEM**

(30) Priority: 18.10.2024 FI 20246243
(71) Applicant: Nokia Solutions and Networks Oy, 02610 Espoo (FI)
(72) Inventor: HONKALA, Mikko Johannes, Espoo (FI); KORPI, Dani Johannes, Tampere (FI); RANINEN, Elias Aksel, Espoo (FI); HUTTUNEN, Janne Matti Juhani, Espoo (FI); UUSITALO, Mikko Aleksi, Helsinki (FI)
(74) Representative: Nokia EPO representatives

(57) **Abstract**

The present subject matter relates to a method comprising transmitting to a device a radio frequency signal comprising a first radio frequency signal and a second radio frequency signal, wherein the first radio frequency signal is generated through a first transmission chain, the first transmission chain being configured to implement a first sequence of operations to generate the first radio frequency signal from first data; wherein the second radio frequency signal is generated through a second transmission chain, the second transmission chain being configured to implement a second sequence of operations to generate the second radio frequency signal from second data; wherein the second sequence of operations is different from the first sequence of operations.

## Description

### TECHNICAL FIELD

Various example embodiments relate to telecommunication systems, and more particularly to an apparatus for communicating with an arbitrary waveform.

### BACKGROUND

Wireless communication systems like Long Term Evolution (LTE) and Fifth-generation wireless networks (5G) are based on Orthogonal Frequency Division Multiplexing (OFDM), a method that efficiently utilizes both frequency and time division to maximize data throughput and minimize interference. In these systems, communication between a base station and a user equipment (UE) may be organized through scheduling grants, where each transmitter-receiver (Tx-Rx) pair is allocated specific time and frequency resources. These allocations adhere to the OFDM waveform structure and numerologies defined by the relevant standards, ensuring compatibility and efficient use of the spectrum. However, as the complexity and demands of modern networks increase, particularly with the advent of Sixth-generation wireless networks (6G), resource management becomes increasingly complex.

### SUMMARY

Example embodiments provide an apparatus for a wireless communication system for transmission of first data and second data, the apparatus comprising at least one processor; and at least one memory storing instructions that, when executed by the at least one processor, cause the apparatus to: transmit to a device a radio frequency (RF) signal comprising: a first radio frequency signal, comprising the first data and covering a first time range and first frequency range, and a second radio frequency signal comprising the second data and covering a second time range and second frequency range, where the first time range includes the second time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform.

Example embodiments provide a method (transmission method) comprising: transmitting to a device a radio frequency signal comprising: a first radio frequency signal comprising first data and covering a first time range and first frequency range, and a second radio frequency signal comprising second data and covering a second time range and second frequency range, where the first time range includes the second time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform.

Example embodiments provide a computer program product comprising processor executable instructions for causing an apparatus for performing at least the transmission method.

Example embodiments provide a non-transitory computer readable medium comprising program instructions that, when executed by an apparatus, cause the apparatus to perform at least the transmission method.

Example embodiments provide a device for a wireless communication system, the device comprising at least one processor; and at least one memory storing instructions that, when executed by the at least one processor, cause the device to: receive a radio frequency signal comprising: a first radio frequency signal comprising first data and covering a first time range and first frequency range, and a second radio frequency signal comprising second data and covering a second time range and second frequency range, where the second time range includes the first time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform.

Example embodiments provide a method (reception method) comprising: receiving a radio frequency signal comprising: a first radio frequency signal comprising first data and covering a first time range and first frequency range, and a second radio frequency signal comprising second data and covering a second time range and second frequency range, where the second time range includes the first time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform.

Example embodiments provide a computer program product comprising processor executable instructions for causing an apparatus for performing at least the reception method.

Example embodiments provide a non-transitory computer readable medium comprising program instructions that, when executed by an apparatus, cause the apparatus to perform at least the reception method.

Example embodiments provide a negotiation method comprising: receiving from a device during a connection setup between an apparatus and the device capability information of the device; using the capability information to determine whether the device supports a reception of a radio frequency signal, wherein the radio frequency signal comprises: a first radio frequency signal comprising first data and covering a first time range and first frequency range, and a second radio frequency signal comprising second data and covering a second time range and second frequency range, where the first time range includes the second time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform; in case the device supports a reception of the radio frequency signal, sending a message to the device, the message indicating specific values of at least part of second waveform parameters of the second baseband waveform; in response to sending the message receiving from the device a response message, the response message indicating an acknowledgement of the specific values.

Example embodiments provide a computer program product comprising processor executable instructions for causing an apparatus for performing at least the negotiation method.

Example embodiments provide a non-transitory computer readable medium comprising program instructions that, when executed by an apparatus, cause the apparatus to perform at least the negotiation method.

"First," "Second," etc. as used herein, these terms are used as labels for nouns that they precede, and do not imply any type of ordering (e.g., spatial, temporal, logical) unless explicitly defined as such.

### BRIEF DESCRIPTION OF THE DRAWINGS

The accompanying figures are included to provide a further understanding of examples, and are incorporated in and constitute part of this specification. In the figures:
FIG. 1 is a block diagram illustrating an example radio access network in accordance with an example of the present subject matter;
FIG. 2 is a process flowchart illustrating a method for according to an example of the present subject matter;
FIG. 3 is a block diagram illustrating a method to allocate time and frequency resources for a radio frequency signal in accordance with an example of the present subject matter;
FIG. 4 is a block diagram illustrating a method to allocate time and frequency resources for a radio frequency signal in accordance with an example of the present subject matter;
FIG. 5A is a signaling diagram illustrating a negotiation method between an apparatus and a device of the wireless communication system in accordance with an example of the present subject matter;
FIG. 5B is a signaling diagram illustrating a negotiation method between an apparatus and a device of the wireless communication system in accordance with an example of the present subject matter;
FIG. 6 is a signaling diagram illustrating a negotiation method between an apparatus and a device of the wireless communication system in accordance with an example of the present subject matter;
FIG. 7 is a process flowchart illustrating a negotiation method for according to an example of the present subject matter;
FIG. 8 is a diagram illustrating an apparatus in accordance with an example of the present subject matter;
FIG. 9 is a block diagram illustrating an example apparatus according to the present subject matter;
FIG. 10A depicts an example of learned constellation shapes in accordance with an example of the present subject matter; and
FIG. 10B depicts an example of learned constellation shapes in accordance with an example of the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable a dual-signal approach with optimized resource utilization by tailoring each signal to the specific characteristics of the data or communication channel. For example, one signal can be designed for high reliability and resistance to interference, making it suitable for transmitting critical control signals or data in noisy environments. Conversely, the other signal can be optimized for high data throughput, effectively managing non-critical or bulk data. The dual-signal approach may enable the use of waveforms optimized for specific use cases, such as massive machine-type communications (mMTC) or ultra-reliable low-latency communications (URLLC), further enhancing network capabilities. The dual-signal approach may support dynamic spectrum management, with each signal occupying different frequency bands to minimize congestion and improve coexistence with other signals. This setup may also provide redundancy, as one signal may be used to maintain communication if the other signal is not received or is received, but has low quality, and so on, thereby enhancing overall system reliability. This approach may also facilitate the use of learned or proprietary waveforms, where one of the signals is produced at least partially by a machine learning model such as a neural network. Such waveforms may often have unforeseen characteristics which cannot be determined beforehand. Additionally, the present subject matter may support backward compatibility with legacy systems while integrating next-generation technologies into a 5G/Sixth-generation wireless networks (6G) OFDM-based physical layer, enhancing performance and ensuring compliance with standards. Hence, the present subject matter may enable communicating with an arbitrary waveform in a wireless communication system.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a 6G based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

An apparatus may be configured to transmit to a device a radio frequency signal. The apparatus may, for example, be a transmitter of a node of the wireless communication system, wherein the node serves the device, and the device may, for example be a user equipment. In this case, the user equipment may be configured to receive the RF signal from the node in accordance with the present subject matter. In another example, the apparatus may be a user equipment that configured to transmit data to a node of the wireless communication system. In this case, the user equipment may be configured to transmit the RF signal to the node in accordance with the present subject matter.

The radio frequency signal comprises a first radio frequency signal and a second radio frequency signal. The radio frequency signal may, for example, be a composite signal obtained by combining, such as through addition, the first and second radio frequency signals. Alternatively, the composite signal may be formed through other methods of composition, such as modulation, multiplexing, or superposition, where each component signal maintains its distinct characteristics within the composite structure. This approach may allow for the simultaneous transmission of different types of data or services, each optimized by its respective transmission chain, thereby enhancing overall communication efficiency and performance.

The first radio frequency signal comprises first data. The first radio frequency signal occupies or covers a first time range and a first frequency range. The first time range may refer to a span between two defined points in time. The first time range may be one time interval or multiple distinct time intervals. That is, the entire first time range may either be considered as a single time interval or divided into distinct smaller time intervals. The first frequency range may be one frequency interval or multiple distinct frequency intervals.

The second radio frequency signal comprises second data. The second radio frequency signal occupies or covers a second time range and a second frequency range. The second time range may refer to a span between two defined points in time. The second time range may be one time interval or multiple distinct time intervals. That is, the entire second time range may either be considered as a single time interval or divided into distinct smaller time intervals. The second frequency range may be one frequency interval or multiple distinct frequency intervals.

The first time range includes the second time range. This may mean that the start time of the second time range is equal to or later than the start time of the first time range, and the end time of the second time range is equal to or earlier than the end time of the first time range.

The first and second frequency ranges are distinct may mean that the two frequency ranges do not overlap; there is no frequency that belongs to both ranges. In terms of frequency intervals, this may imply that the frequency intervals defining the first frequency range are entirely separate from the frequency intervals defining the second frequency range, with no shared frequencies between them. Adjacent first and second frequency intervals may be separated by a gap, or they may be adjacent but still have no overlap at any specific frequency point.

The first time and frequency ranges, as well as the second time and frequency ranges, may be scheduled or defined by a scheduler to manage the transmission of the first and second data to the device, respectively. The scheduler may, for example, be part of the apparatus. The scheduled time and frequency ranges may represent a scheduling instance for a specific transmission time unit of the wireless communication system. The interval between the start time of the first time range and the end time of the first time range may be the transmission time unit. The transmission time unit may be the smallest unit of time over which resources may be allocated within a scheduling instance. The transmission time unit may, for example, be a transmission time interval (TTI) or another scheduling time interval defined by the radio access technology used in the wireless communication system. The scheduling may be based on various factors, such as system load, priority of the first and second data, type of the first and second data, or available bandwidth, allowing to dynamically adapt to changing conditions.

The first radio frequency signal may be obtained or derived from a first baseband waveform. The baseband waveform may refer to a signal (low-frequency signal (baseband)) generated by modulating digital data before it is upconverted to a radio frequency for transmission. The second radio frequency signal may be obtained from a second baseband waveform. The first and second baseband waveforms differ in type. Different types of baseband waveforms may refer to variations in the characteristics of respective signals used to encode information for transmission. These variations may allow baseband waveforms to be optimized for specific communication needs, such as improving data rates, reducing interference, or enhancing robustness in noisy environments.

The apparatus may, for example, be configured to generate the radio frequency signal using a first transmission chain and a second transmission chain. The apparatus may, for example, comprise the first transmission chain and the second transmission chain. The first transmission chain may, for example, be a default transmission chain used by transmitters of the wireless communication standard in accordance with the communication protocol defined by the wireless communication system. The second transmission chain may enable data communication with an arbitrary waveform. The second transmission chain may provide the ability to modify any property of the second baseband waveform.

The first transmission chain may be configured to generate the first baseband waveform by processing the first data. The first transmission chain may be configured to upconvert the first baseband waveform to the first radio frequency signal. This may involve the combination of the first baseband waveform with a carrier frequency to generate the first radio frequency signal. The first baseband waveform may be obtained in accordance with a first waveform generation technique. The first transmission chain may consist of several stages, including baseband waveform generation, and radio frequency signal processing. Each stage in the first transmission chain may be executed by one or more specific operations, meaning that the first transmission chain implements a series of coordinated operations. Specifically, the first transmission chain is configured to implement a first set of operations to generate the first radio frequency signal from the first data. The first set of operations may be applied to the first data, transforming it to the first radio frequency signal. Each operation in the first set of operations may be implemented using a hardware component and/or software component. The first set of operations includes a subset referred to as first set of waveform operations, implementing the first waveform generation technique, along with one or more additional operations referred to as first set of RF operations, for processing the radio frequency domain. The first transmission chain may be configured with first transmission chain parameters for generating radio frequency signals. The first transmission chain may be configured with specific values of a first set of parameters for generating the first radio frequency signal. The first set of parameters may be a subset of or the entire first transmission chain parameters. The first set of parameters may comprise a first resource parameter that indicates the time and frequency resources allocated for the first radio frequency signal. The first set of parameters may further comprise first waveform parameters, which configure the first set of waveform operations. The first waveform parameters may, for example, indicate modulation schemes and encoding techniques. The first set of parameters may further comprise first RF parameters for configuring the first set of RF operations. The first RF parameters may, for example, indicate power levels, and carrier frequencies.

The second transmission chain may be configured to generate the second baseband waveform by processing the second data. The second transmission chain may be configured to upconvert the second baseband waveform to the second radio frequency signal. This may involve the combination of the second baseband waveform with a carrier frequency to generate the second radio frequency signal. The second baseband waveform may be obtained in accordance with a second waveform generation technique. The second transmission chain may consist of several stages, including baseband waveform generation, and radio frequency signal processing. Each stage in the second transmission chain may be executed by one or more specific operations, meaning that the second transmission chain implements a series of coordinated operations. Specifically, the second transmission chain is configured to implement a second set of operations to generate the second radio frequency signal from the second data. The second set of operations may be applied to the second data, transforming it to the second radio frequency signal. Each operation in the second set of operations may be implemented using a hardware component and/or software component. The second set of operations includes a subset referred to as second set of waveform operations, implementing the second waveform generation technique, along with one or more additional operations referred to as second set of RF operations, for processing the radio frequency domain. The second transmission chain may be configured with second transmission chain parameters for generating radio frequency signals. The second transmission chain may be configured with specific values of a second set of parameters for generating the second radio frequency signal. The second set of parameters may be a subset of or the entire second transmission chain parameters. The second set of parameters may comprise a second resource parameter that indicates the time and frequency resources allocated for the second radio frequency signal. The second set of parameters may further comprise second waveform parameters, which configure the second set of waveform operations. The second waveform parameters may, for example, indicate modulation schemes and encoding techniques as well as the second frequency range e.g., it may indicate the physical resource blocks (PRBs) at the boundaries of the second frequency range. The second set of parameters may further comprise second RF parameters for configuring the second set of RF operations. The second RF parameters may, for example, indicate power levels, and carrier frequencies.

Hence, the use of separate transmission chains for the first and second radio frequency signals may allow for a highly specialized approach where each chain is optimized for its respective data, ensuring that both signals may be efficiently generated and transmitted without interference, thereby enhancing the overall performance and flexibility of the wireless communication system. For instance, while the first transmission chain might prioritize robustness for critical data, the second transmission chain may be optimized for higher throughput or efficiency, using modulation schemes that maximize data rate while ensuring the signal remains within the designated frequency spectrum.

An alternative approach may involve using a single transmission chain to generate the first baseband waveform and the second baseband waveform by processing the first data and the second data respectively. The transmission chain may be configured to upconvert the first baseband waveform to the first radio frequency signal and to upconvert the second baseband waveform to the second radio frequency signal. The transmission chain may be configured to combine the first radio frequency signal and the second baseband waveform into the radio frequency signal. This setup may reduce hardware complexity and cost.

Yet another alternative approach may involve using a single transmission chain to generate the first baseband waveform and the second baseband waveform by processing the first data and the second data respectively. These baseband waveforms may be combined to produce a third baseband waveform, which is a sum of the first and second baseband waveforms. The transmission chain may be configured to upconvert the third baseband waveform into the radio frequency signal. This setup may further reduce hardware complexity and cost.

According to one example, the type of the first baseband waveform is defined by at least one of: the first waveform generation technique and the first waveform parameters. The type of the second baseband waveform is defined by at least one of: the second waveform generation technique and second waveform parameters. This may indicate that the first and second baseband waveforms differ in type based on either the method used to generate them and/or the specific parameters that define their characteristics. These differences may allow for customization of the waveforms to optimize performance for specific applications, such as improving data rates, reducing interference, or adapting to different communication environments. Each waveform type may thus be tailored through its unique generation technique or specific parameters. The waveform generation technique may, for example, involve source encoding, channel coding for error protection, data scrambling, modulation mapping onto symbols, frame/packet formation, pulse shaping for bandwidth control, and digital-to-analog conversion.

The differences between the two signals may additionally or alternatively be controlled through other factors. In one example, the second set of operations is different from the first set of operations. That is, the second set of operations is partially or entirely different from the first set of operations. The partial difference between the second set of operations and the first set of operations indicates that while there are some differences between the two sets, they also share some similarities. In one example, some operations in the second set of operations are entirely different from those in the first set of operations, while other operations remain the same. In another example, some operations might be present in both sets but are executed in a different order or with different priorities. This partial difference may also mean that some operations in the second set of operations could be modified versions of those in the first set of operations, where only certain aspects, like the parameter values, are altered while the type of operation remains consistent. In one example, the second set of operations is different from the first set of operations may mean that the second set of waveform operations is partially or entirely different from the first set of waveform operations. For example, the first set of RF operations and the second set of RF operations may be identical, while the first set of waveform operations may be either fully or partially different from the second set of waveform operations. This example may thus cover the case where the RF operations in the two sets are the same and the difference is only in the baseband signal generation. Alternatively, the second set of operations is different from the first set of operations may mean that the second set of RF operations is partially or entirely different from the first set of RF operations. Hence, the differences could lie in the set of waveform operations, where the second set of operations might use a different modulation scheme, filtering technique, or waveform shaping method compared to the first set of operations. Alternatively, the variation may be in the RF operations, such as using a different carrier frequency, or power amplification approach. Thus, "partially different" covers a range of scenarios where the two sets share some similarities but differ in specific operations, configurations, or execution details. In contrast, when stating "the second set of operations is entirely different from the first set of operations," may mean that every operation in the second set differs from those in the first, whether in terms of the type of operation, the configuration of parameters, or the overall process flow. For example, the first and second sets of operations might be entirely different, with both the waveform and RF operations being distinct in each set, thus covering all potential scenarios of divergence between the two sets.

According to one example, the first waveform generation technique is the second waveform generation technique, wherein the second waveform parameters are different from the first waveform parameters. Hence, both waveforms may be generated using the same fundamental method. For example, both waveforms might use OFDM, or another modulation technique. This may ensure consistency in the underlying approach to generating the signal, making both waveforms compatible with the same system architecture or communication technology. However, the two waveforms differ in their parameters, such as frequency, bandwidth, symbol rate, or timing characteristics. This may enable resource efficiency by reusing the same infrastructure and provide flexibility to optimize the system for different conditions (e.g., high data rates or robust communication).

According to one example, the first waveform generation technique is different from the second waveform generation technique. This may mean that the second set of waveform operations is partially or entirely different from the first set of waveform operations. This difference may manifest in several ways, such as the underlying modulation schemes, the mathematical algorithms used to generate the waveforms, or the specific signal processing techniques employed. For instance, the first waveform generation technique might use OFDM. In contrast, the second waveform generation technique may use a single-carrier modulation method or another modulation method).

In another example, the first waveform generation technique is different from the second waveform generation technique may mean that the second waveform generation technique may use a second modulation scheme different from a first modulation scheme being used by the first waveform generation technique. The second modulation scheme may, for example, be a machine learning (ML) based modulation scheme. The second modulation scheme may, for example, include a machine learning based constellation mapping, whereas the first modulation scheme may include a classical method such as Quadrature Amplitude Modulation (QAM) or Phase Shift Keying (PSK). By leveraging machine learning, the present subject matter may develop customized waveforms and constellations tailored to specific context-dependent scenarios, thereby meeting a variety of user-defined requirements. For instance, customized constellations can significantly reduce or even eliminate the need for demodulation reference signals (DMRS), leading to a potential 16.7% increase in throughput compared to OFDM transmission, where typically 2 out of 14 OFDM symbols may be reserved for DMRS. This example may thus enable two devices, such as a base station and a user terminal, to communicate using these optimized waveforms and constellations within the structure of an OFDM-based network of the wireless communication system.

According to one example, the first waveform generation technique comprises a frequency to time transformation operation, and the second waveform generation technique excludes the frequency to time transformation operation.

For example, with the first waveform generation technique a process is used to convert frequency-domain information into the time domain. This may be typical in methods like OFDM, where the signal is initially represented in the frequency domain and then transformed into the time domain for transmission using techniques like the Inverse Fast Fourier Transform (IFFT). In contrast, the second waveform generation technique may not involve this frequency-to-time transformation e.g., meaning the signal is generated and processed entirely in the time domain. This may refer to ML based modulation schemes, where the modulation may directly affect the signal in the time domain without any conversion from the frequency domain. The advantage of excluding the frequency-to-time transformation in the second waveform generation technique may potentially reduce complexity and lower computational requirements, while the first waveform generation technique, which includes the transformation, may provide benefits like better spectral efficiency and resistance to interference.

According to one example, the first waveform generation technique is an OFDM-based waveform generation technique.

According to one example, the first frequency range is separated from the second frequency range by one or more guard bands. The guard band may be a frequency gap. Guard bands may be unused portions of the frequency spectrum intentionally placed between active frequency ranges to prevent interference. These bands may act as buffers to ensure that signals transmitted in the first frequency range do not overlap with or interfere with signals in the second frequency range, especially in systems where adjacent frequencies are used.

According to one example, the first time range consists of the second time range followed by a guard interval. This may mean that the first time range is made up of two parts: the second time range immediately followed by a guard interval, a period of inactivity or silence. The guard interval may be introduced after the second time range to prevent interference, particularly from delayed signals or reflections that could overlap with the next transmission phase. The next transmission phase may refer to transmission of data during a transmission time unit immediately following the specific transmission time unit. This structure may allow the system to maintain clean signal boundaries, ensuring that any residual signal from the second time range does not affect subsequent transmissions or time ranges, thus improving communication reliability.

The present subject matter may advantageously use the second waveform generation technique so it may not need pilot signals. In this case, the second radio frequency signal may be pilotless signal e.g., the decoding of the second radio frequency signal may not need a DMRS.

According to one example, the radio frequency signal further comprises a reference signal covering the first and second frequency ranges and a third time range, wherein the second time range is separated from the third time range by a guard interval.

The reference signal may be transmitted over both the first and second frequency ranges and during a third time range, where the second time range may consist of multiple distinct intervals. If the second time range is composed of multiple distinct intervals, a guard interval may be placed between the interval adjacent to the third time range, and the third time range, to prevent interference. These guard intervals may act as buffers to reduce the risk of signal overlap due to delays or reflections, ensuring clean and reliable communication.

In one example, the reference signal may comprise a first and a second component. The first component covers the first frequency range and the third time range, while the second component covers the second frequency range and the third time range. The second component may include a reference signal such as Positioning Reference Signals (PRS) but excludes a reference signal like DMRS, whereas the first component includes both types of reference signals e.g., DMRS and PRS. This design may be due to the fact that the second waveform generation technique may support an advanced symbol mapping method, which may eliminate the need for a reference signal for decoding at a receiver of the signal.

According to one example, the apparatus is configured to perform a negotiation method with the device. The negotiation method may comprise communication operations that may be performed by the apparatus and communication operations that may be performed by the device.

For example, the negotiation method may enable to agree on values (referred to as waveform values) of at least part of the second waveform parameters. In one example, the at least part of the second waveform parameters may be the entire second waveform parameters. Alternatively, the at least part of the second waveform parameters may be a selected subset of the second waveform parameters, wherein the subset may be arbitrarily selected or selected based on predefined criteria, such as optimization for performance, bandwidth, or energy efficiency.

According to one example, the negotiation method comprises: receiving from the device during a connection setup between the apparatus and the device capability information of the device. For example, the capability information may be included in a Radio Resource Control (RRC) message or in a random access preamble sent by the device to the apparatus during the connection setup. The capability information may be used to determine whether the device supports a reception of the radio frequency signal. That is, whether device supports reception of the radio frequency signal to recover the first and second data that is comprised in the radio frequency signal. In case the device supports a reception of the radio frequency signal, a message may be sent to the device. The message indicates the waveform values of the at least part of the second waveform parameters. In response to sending the message, a response message may be received from the device. The response message indicates an acknowledgement of the waveform values. This example may, for example, be implemented in case the apparatus serves the device.

According to one example, the device indicates whether it supports the transmission of the radio frequency signal that is obtained by the first and second waveform generation techniques. This example may be implemented in case the device is served by the apparatus and the device is configured to perform the transmission method toward the apparatus.

According to one example, the negotiation method comprises before sending the message: sending an initial message to the device. The initial message indicates possible values of the second waveform parameters. An initial response message may be received from the device indicating supported values of the second waveform parameters, wherein the waveform values are selected from the supported values. This example may, for example, be implemented in case the apparatus serves the device.

According to one example, the message comprises: a waveform index of predefined indexes, the waveform index indicating the specific values of the at least part of the second waveform parameters; or a bit vector representing the specific values of the at least part of the second waveform parameters.

For example, the second waveform generation technique may be classified into a set of categories, wherein each category of the set of categories is associated with specific second waveform parameters. These specific second waveform parameters are also indicating waveform operations which are involved in the second waveform generation technique having that category. These specific second waveform parameters may be at least part of the second waveform parameters. For example, if the second waveform generation technique is an OFDM-based second waveform generation technique, the second waveform parameters may include: OFDM subcarrier spacing, OFDM cyclic prefix length, list of constellation parameters, low-density parity-check code (LDPC) code rate, index of the first PRB, and the total number of PRBs.

The set of categories may be indexed in advance in order to obtain the predefined indexes for the set of categories respectively. The index may, for example, be referred to as waveform identifier (ID). The device may support part or all of the set of categories. Alternatively, the second waveform generation technique may be represented with a predefined waveform ID (known by the device) along with the index of the first PRB and the total number of PRBs allocated for the second radio frequency signal. This may be particularly advantageous in case the second waveform parameters do not comprise a parameter representing the allocated resources.

Each category of the set of categories may thus have its own specific second waveform parameters. The values of the specific second waveform parameters of each category may be represented in a binary format. Specifically, each category of the set of categories may be associated with a bit vector whose sequence of bits encodes the values of the specific second waveform parameters e.g., the bit vector may encode the waveform values described herein. The content or the structure of the bit vector may be indicative of the associated category. For example, if the device provides as part of the capability information the one or more categories it supports (e.g., as waveform IDs), the apparatus may select a category of the supported categories and create the corresponding bit vector. The values of the second waveform parameters of the category may be quantized in a predefined manner to obtain binary values which may be put in a predefined order to produce the overall bit vector. In one example, the apparatus may have a list of bit vectors for the set of categories, so that it may select one of the bit vectors based on the capability information.

For example, the constellation may either be explicitly signaled with a list of quantized constellation points or by providing the parameters of a parameterized constellation.

The apparatus may be configured to repeat the transmission method in order to transmit further first data and further second data to the device. According to one example, the apparatus may be configured to adapt the second waveform generation technique one or more times. The adaptation of the second waveform generation technique may be performed by selecting a (new) category of the set of categories which is different from the current category being used. The selection may further comprise the generation of the selection of the bit vector for the selected category.

In one example, the adaptation may be automatically performed, by automatically selecting the new category. For example, the automatic adaptation may be performed on a periodic basis. In one example, the adaptation may be performed by executing the negotiation method to negotiate with the device the new category.

According to one example, the second data is low latency application data. The first data may, for example, comprise control data or application data. In one example, the device and the apparatus may maintain a regular data channel for control traffic, but the second radio frequency signal may also be used for control data after the initial setup.

According to one example implementation of the negotiation method, the negotiation method comprises: a) receiving from the device during a connection setup between the apparatus and the device capability information of the device, b) using the capability information to determine that the device supports reception of the radio frequency signal, c) sending a message to the device, the message indicating candidate values of the at least part of the second waveform parameters, in response to sending the message d) receiving from the device a response message for the message, e) in response to determining that the response message indicates a rejection of the candidate values, repeating operations c) to f) with other candidate values of the at least part of the second waveform parameters and f) in response to determining that the response message indicates an acknowledgement of the candidate values, providing the waveform values as the candidate values. The repetition may be performed until the acknowledgement is received from the device.

In another example, the negotiation method may enable to agree on values of the second set of parameters. According to one example, the first transmission chain is configured with first specific values of the first set of parameters, wherein the second transmission chain is configured with second specific values of the second set of parameters.

According to one example implementation of the negotiation method, the negotiation method comprises: receiving by the apparatus from the device during a connection setup between the apparatus and the device capability information of the device, using by the apparatus the capability information to determine that the device supports a reception of the radio frequency signal, sending a message to the device, wherein the message indicates the second specific values of the at least part of the second set of parameters, and in response to sending the message receiving from the device a response message for the message, the response message indicating an acknowledgement of the second specific values.

According to one example implementation of the negotiation method, the negotiation method comprises: receiving by the apparatus from the device during a connection setup between the apparatus and the device capability information of the device, using by the apparatus the capability information to determine that the device supports a reception of the radio frequency signal, sending an initial message to the device, wherein the initial message indicates the second transmission chain parameters, receiving an initial response message indicating the second set of parameters as being supported by the device, sending a message to the device, wherein the message indicates the second specific values of the at least part of the second set of parameters, and in response to sending the message receiving from the device a response message for the message, the response message indicating an acknowledgement of the second specific values.

According to one example implementation of the negotiation method, the negotiation method comprises: a) receiving from the device during a connection setup between the apparatus and the device capability information of the device, b) using the capability information to determine that the device supports reception of the radio frequency signal, c) sending a message to the device, the message indicating candidate values of the at least part of the second set of parameters, in response to sending the message d) receiving from the device a response message for the message, e) in response to determining that the response message indicates a rejection of the initial values, repeating operations c) to f) with other candidate values of the at least part of the second set of parameters and f) in response to determining that the response message indicates an acknowledgement of the candidate values, providing the second specific values as the candidate values. The repetition may be performed until the acknowledgement.

In one example, the at least part of the second set of parameters (used in the negotiation method) may be at least part of the second waveform parameters and at least part of the second RF parameters. In one example, the at least part of the second set of parameters may be the second set of parameters. In one example, the at least part of the second set of parameters may be at least part of the second waveform parameters. In one example, the at least part of the second set of parameters may be the second waveform parameters. In one example, the at least part of the second set of parameters may be at least part of the second RF parameters. In one example, the at least part of the second set of parameters may be the second RF parameters.

In one example, the second time range and second frequency range may define resources for a physical downlink shared channel (PDSCH) and a physical uplink shared channel (PUSCH). This may enable to use the second time range and second frequency range for downlink and uplink transmissions. In one example, the device may be configured to send data to the apparatus using the second time and frequency ranges. For example, in response to receiving the radio frequency signal, the device may be configured to send data to the apparatus using the second time and frequency ranges.

In one example, the outer loop link adaptation (OLLA) mechanism may be switched off for the second transmission chain. Switching off the OLLA for the second transmission chain may reduce processing complexity and lower latency, as it may eliminate the need for constant feedback and adjustment of link parameters. This may avoid the fluctuations that dynamic adaptation may introduce.

The second time range and the second frequency range may define a so-called container, as they encompass a specific segment of time and frequency within which the second radio frequency signal can be transmitted. In particular, these ranges establish the time and frequency boundaries that define the limits of the container. The container may be associated with parameters which may be referred to as container parameters. The container parameters may comprise at least part of the second set of parameters. For example, the container parameters may be the second set of parameters or the second waveform parameters.

The apparatus and the device may form a Tx-Rx pair. The flexibility of using containers in the wireless communication system may allow the Tx-Rx pair to utilize any waveform that both devices support, as long as they adhere to predefined time and frequency boundaries. This capability may enable the Tx-Rx pair to provide the second radio frequency signal by modifying various waveform properties, such as the constellation scheme, pilot configuration, superimposed pilots, and cyclic prefix. They may opt to move away from the traditional FFT-based waveform entirely. This flexibility may empower the Tx-Rx pair to optimize the waveform for specific scenarios, enhancing performance without disrupting the broader wireless communication system's time and frequency structure.

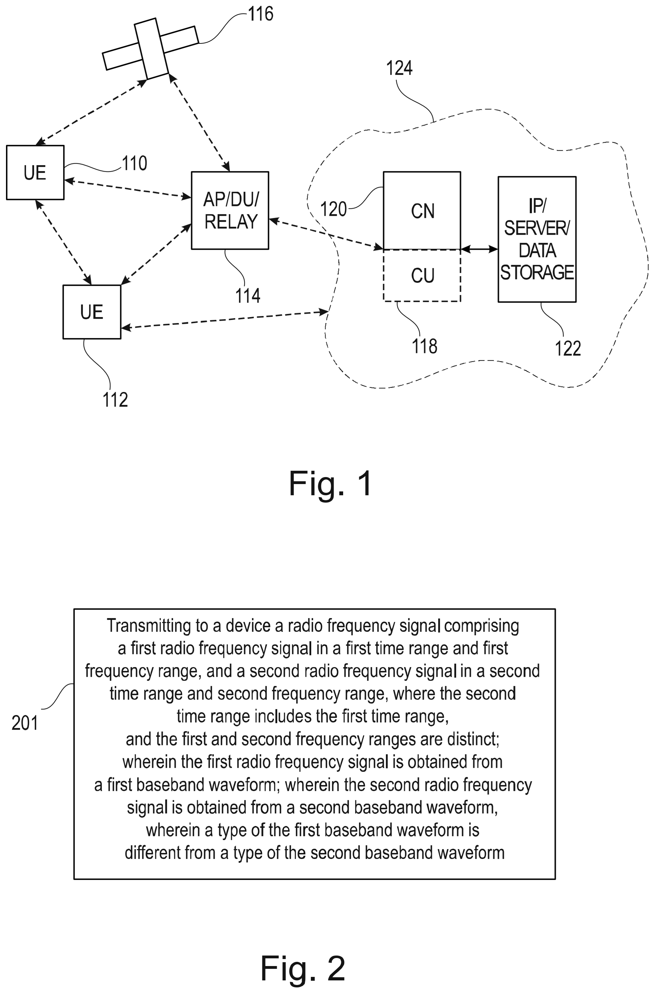

**FIG. 1** is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in loT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using Multiple Input Multiple Output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, loT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU) in the node 114) and non-real time functions being carried out in a centralized manner (in a centralized unit, CU 118). It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

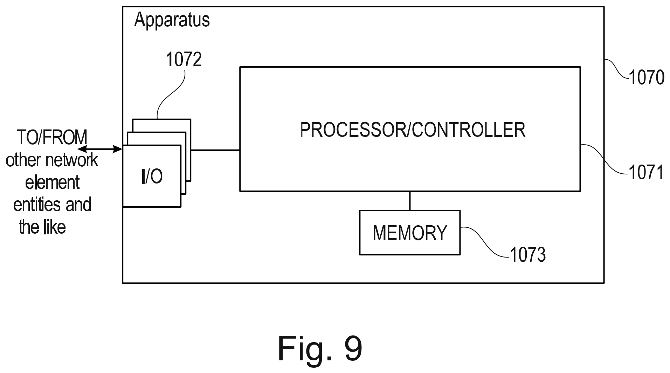

**FIG. 2** is a process flowchart illustrating a method according to an example of the present subject matter. For the purpose of explanation, the method described in reference to FIG. 2 may be implemented in an apparatus such as the node 114 illustrated and described in reference to FIG. 1 or apparatus illustrated and described in reference to FIG. 9 but is not limited to this implementation.

At block 201, a radio frequency signal may be transmitted to a device. The radio frequency signal comprises a first radio frequency signal and a second radio frequency signal. The first radio frequency signal comprises first data and covers a first time range and first frequency range. The second radio frequency signal comprises second data and covers a second time range and second frequency range. The first time range includes the second time range, and the first and second frequency ranges are distinct, wherein the first radio frequency signal is obtained from a first baseband waveform; wherein the second radio frequency signal is obtained from a second baseband waveform, wherein a type of the first baseband waveform is different from a type of the second baseband waveform

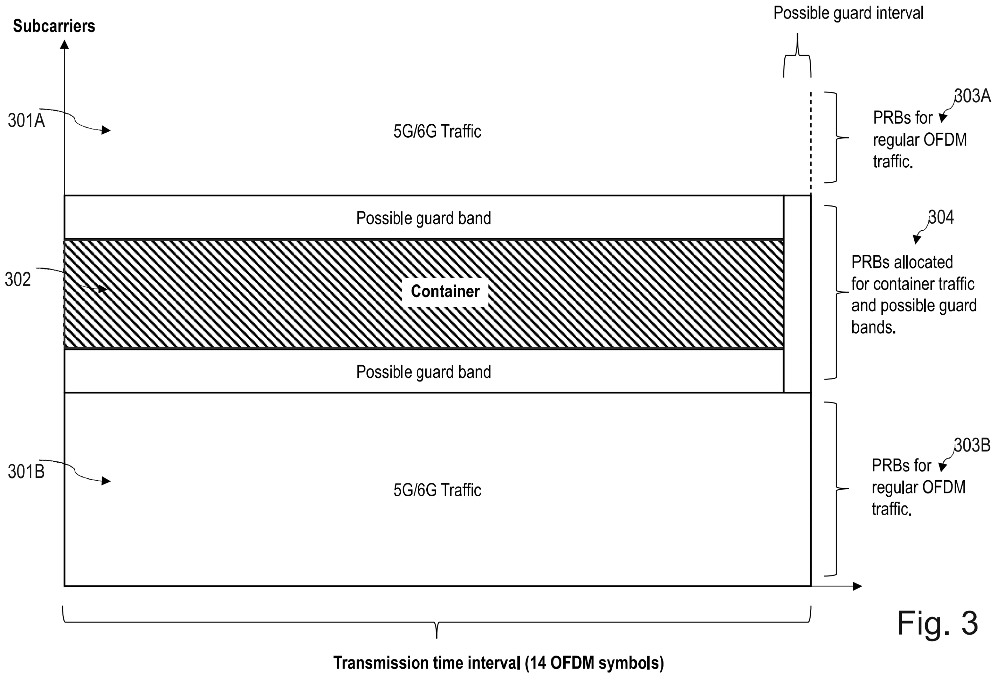

**FIG. 3** is a block diagram illustrating a method to allocate time and frequency resources for a radio frequency signal in accordance with an example of the present subject matter. The radio frequency signal may comprise a first radio frequency signal and a second radio frequency signal.

The diagram illustrates the allocation of subcarriers and time resources within a TTI consisting of 14 OFDM symbols, specifically in the context of 5G/6G traffic management. The horizontal axis represents the time domain (spanning the TTI), while the vertical axis represents the frequency domain (spanning the subcarriers).

The diagram comprises a dashed area representing a container 302 that occupies a specific portion of the available frequency spectrum (subcarriers) and time slots, separated by possible guard bands from other regular 5G/6G traffic 301A and 301B. The container 302 may be used to transmit the second radio frequency signal. The first radio frequency signal may comprise the regular 5G/6G traffic 301A and 301B.

Since data transmissions within the container 302 may not adhere to standard OFDM traffic, it may be necessary to establish guard bands in the frequency domain and a guard interval at the end of the slot of the container 302 to prevent interference with other traffic. Alternatively, if the container 302 is employed with OFDM, then the guard bands and/or guard interval may not be required.

The container 302 may be a distinct block of resources within the TTI, with its PRBs 304 allocated for container-specific traffic and potential guard bands. Surrounding the container 302, other PRBs 303A and 303B are dedicated to regular OFDM traffic 301A and 301B respectively, both above and below the container 302 in the frequency domain. This may enable the standard OFDM-based 5G/6G traffic operates outside of the container 302, guard bands, and guard interval.

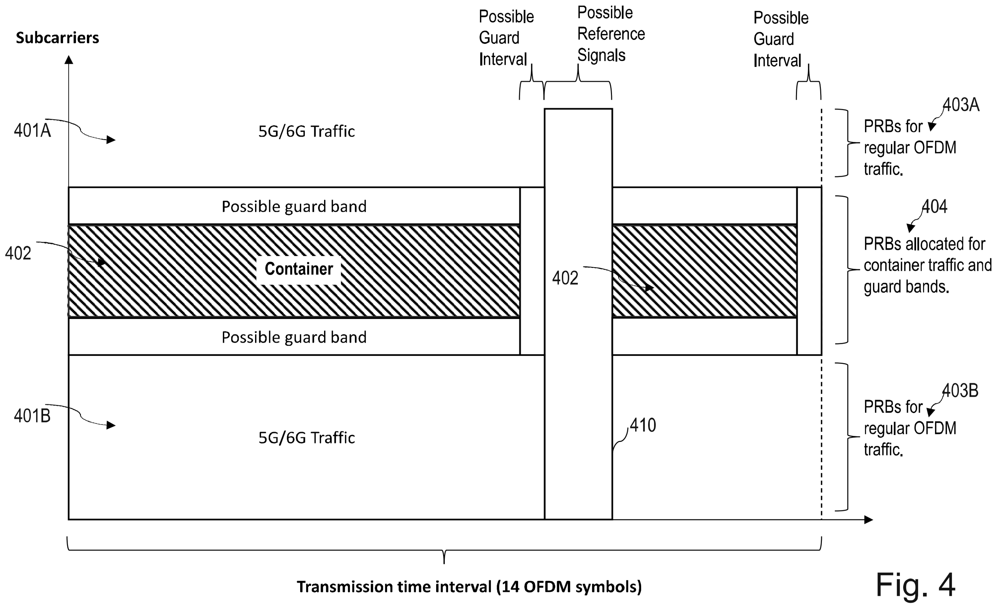

**FIG. 4** is a block diagram illustrating a method to allocate time and frequency resources for a radio frequency signal in accordance with an example of the present subject matter. The radio frequency signal may comprise a first radio frequency signal, a second radio frequency signal and a reference signal.

The diagram provides a detailed depiction of resource allocation within a TTI that consists of 14 OFDM symbols, specifically for managing 5G/6G traffic. The horizontal axis represents the time domain (spanning the TTI), while the vertical axis represents the frequency domain (spanning the subcarriers).

The diagram comprises a dashed area representing a container 402 that occupies a specific portion of the available frequency spectrum (subcarriers) and time slots, separated by possible guard bands from other regular 5G/6G traffic 401A and 401B. The diagram further comprises a time and frequency segment 410 that is allocated for a reference signal. The container 402 may be used to transmit the second radio frequency signal. The first radio frequency signal may comprise the regular 5G/6G traffic 401A and 401B.

The container 402 is separated from the time and frequency segment 410 by a guard interval and another guard interval at the end of the slot of the container 402 to prevent interference with other traffic.

The container 402 may be two distinct blocks of resources within the TTI, with its PRBs 404 allocated for container-specific traffic and potential guard bands. Surrounding the container 402, other PRBs 403A and 403B are dedicated to regular OFDM traffic 401A and 401B respectively, both above and below the container in the frequency domain. This may enable the standard OFDM-based 5G/6G traffic operates outside of the container 402, guard bands, and guard intervals. The reference signal may be allocated at least part of the PRBs 403A, 403B and 404.

Hence, the resource allocations illustrated in FIGs 3 and 4 may ensure that the container's traffic is isolated from regular traffic, minimizing interference and allowing for specialized handling within the transmission framework. It may enable the creation of a spectrally separated container for proprietary or non-standard compliant communication waveforms. The container resources may be used by the second waveform generation technique. The second waveform generation technique may enable a so-called "any waveform" feature. The any waveform feature may provide significant flexibility in second baseband waveform selection, allowing for tailoring of second baseband waveforms to specific radio communication situations or systems. This may be achieved by designing time-frequency blocks, in the container, that can support any waveform that both the apparatus and device can handle. The any waveform feature may enable the use of advanced waveform technologies, which can provide improved physical layer performance and system throughput compared to the first baseband waveforms such as traditional OFDM baseband waveforms. The any waveform feature may provide the ability to modify any property of the second baseband waveform, such as constellation, pilot configuration, superimposed pilots, cyclic prefix, or eliminating the FFT-based paradigm entirely, and thus provide even greater flexibility. This can lead to improved performance in specific radio communication situations, such as high-mobility or low-latency applications. Additionally, this any waveform feature may enable the use of waveforms optimized for specific use cases, such as massive machine-type communications (mMTC) or ultra-reliable low-latency communications (URLLC), further enhancing network capabilities.

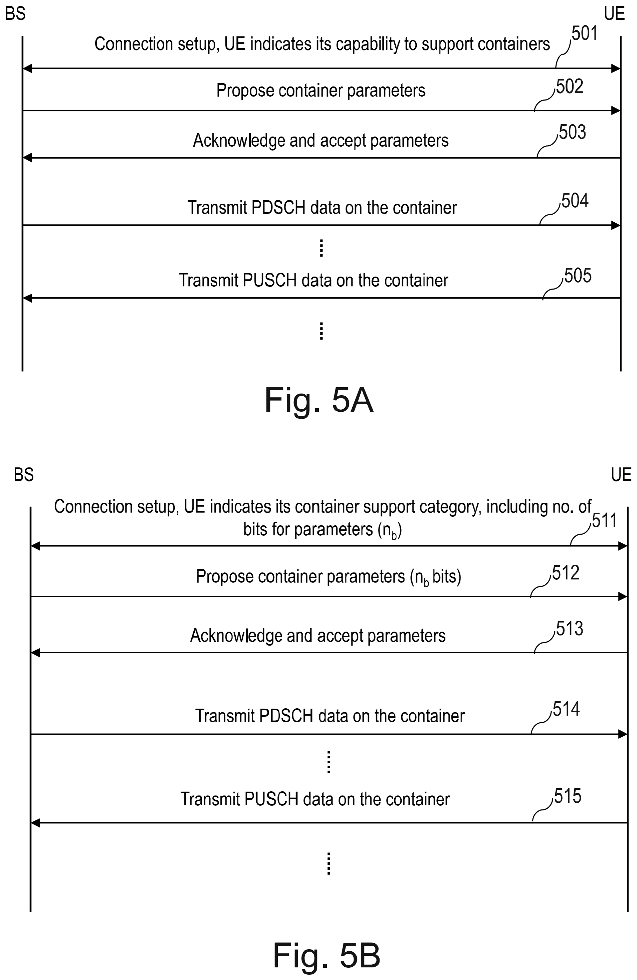

**FIG. 5A** is a signaling diagram illustrating a negotiation method between an apparatus such as a base station (BS) and a device such as a user equipment of the wireless communication system in accordance with an example of the present subject matter.

The diagram illustrates a sequence of communication operations between the base station and the user equipment for use of a container for data transmission between the user equipment and the base station.

Initially, during the connection setup at communication operation 501, the user equipment informs the base station of its capability to support containers. The user equipment may further inform at communication operation 501 the base station of the type of signals it supports within the container, e.g., using a learned constellation shape.

Following this, the base station proposes at communication operation 502 specific container parameters. The container parameters may, for example, include at least part of the second set of parameters. In one example, the at least part of the second set of parameters may be the second set of parameters. In one example, the at least part of the second set of parameters may be at least part of the second waveform parameters. In one example, the at least part of the second set of parameters may be the second waveform parameters. In one example, the at least part of the second set of parameters may be at least part of the second RF parameters. In one example, the at least part of the second set of parameters may be the second RF parameters. In one example, the container parameters may include at least the PRBs allocated to the container. If the container parameters are extracted from a look-up table, the message representing communication operation 502 may also contain the indices associated with the container parameters.

The user equipment then acknowledges and accepts at communication operation 503 these container parameters, agreeing to use them for subsequent communication. Once the container is configured, the base station begins transmitting data at communication operation 504 to the user equipment in accordance with PDSCH and within the container. Correspondingly, the user equipment transmits data back at communication operation 505 to the base station in accordance with PUSCH and within the same container. Thus, the consequent transmissions, whenever they are scheduled on the PRBs allocated for the container, may be transmitted using the agreed parameters. This applies to both uplink (PUSCH) and downlink (PDSCH) transmissions.

This structured approach to communication may allow for efficient and optimized data transfer, ensuring that both the downlink and uplink transmissions are well-coordinated and meet the agreed-upon technical standards.

**FIG. 5B** is a signaling diagram illustrating a negotiation method between an apparatus such as a base station and a device such as a user equipment of the wireless communication system in accordance with an example of the present subject matter. The negotiation method of FIG. 5B may serve as an alternative implementation to the method in FIG. 5A, with the communication operations 511 through 512 providing alternative implementations for communication operations 501 through 502, respectively.

The diagram illustrates a sequence of communication operations between the base station and the user equipment for use of a container for data transmission between the user equipment and the base station.

Initially, during the connection setup at communication operation 511, the user equipment informs the base station of its capability to support containers. The capability information may further indicate one or more categories of the set of categories of the second waveform generation technique. The capability information may further indicate the bit vector(s) the user equipment expects for the definition of the second waveform generation technique.

Following this, the base station proposes at communication operation 512 specific container parameters. This may be provided as a bit vector representing the second waveform parameters.

The user equipment then acknowledges and accepts at communication operation 513 these container parameters, agreeing to use them for subsequent communication. Once the container is configured, the base station begins transmitting data at communication operation 514 to the user equipment in accordance with PDSCH and within the container. Correspondingly, the user equipment transmits data back at communication operation 515 to the base station in accordance with PUSCH and within the same container. Thus, the consequent transmissions, whenever they are scheduled on the PRBs allocated for the container, may be transmitted using the agreed parameters. This applies to both uplink (PUSCH) and downlink (PDSCH).

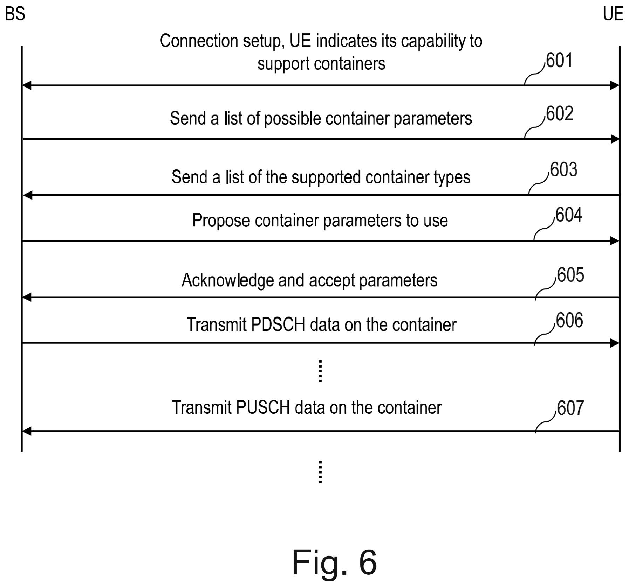

**FIG. 6** is a signaling diagram illustrating a negotiation method between an apparatus such as a base station and a device such as a user equipment of the wireless communication system in accordance with an example of the present subject matter.

The diagram outlines a detailed sequence of operations in the setup and use of a container for data transmission between the base station and the user equipment in a cellular network, likely within advanced LTE or 5G systems.

Initially, during connection setup at communication operation 601, the user equipment signals its capability to support containers. The base station then sends at communication operation 602 a list of possible container parameters, followed by the user equipment responding at communication operation 603 with the types of containers it can support. For example, the base station may send a list of supported waveforms within the container to the user equipment, based on which the user equipment will determine which it supports.

The base station uses this information to propose at communication operation 604 specific container parameters, which the user equipment acknowledges and accepts at communication operation 605. With the container configuration established, the base station begins transmitting data at communication operation 606 to the user equipment using the PDSCH, and the user equipment reciprocates by sending data back at communication operation 607 to the base station using the PUSCH. This process may ensure that both the base station and user equipment collaborate to establish an optimized and mutually compatible container configuration for efficient and reliable data transmission.

The communication operations 604 through 607 are similar to the communication operations 502 through 505 of FIG. 5A, respectively.

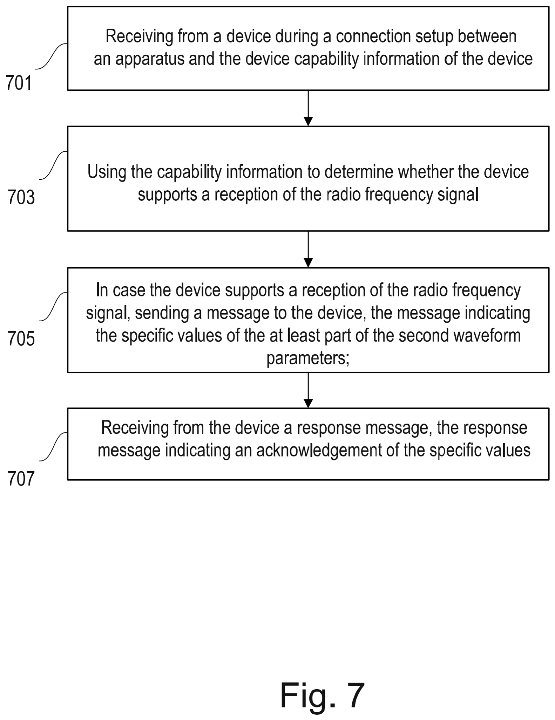

**FIG. 7** is a process flowchart illustrating a negotiation method according to an example of the present subject matter. For the purpose of explanation, the negotiation method described in reference to FIG. 7 may be implemented in an apparatus such as the node 114 illustrated and described in reference to FIG. 1 or apparatus illustrated and described in reference to FIG. 9 but is not limited to this implementation.

During a connection setup between the apparatus and the device capability information of the device may be receiving at block 701 by the apparatus from the device. The capability information may be used at block 703 to determine whether the device supports a reception of a radio frequency signal such as the radio frequency signal described with reference to FIG. 2. In case the device supports a reception of the radio frequency signal, a message may be sent at block 705 to the device, wherein the message indicates the specific values of the at least part of the second waveform parameters. In response to sending the message, a response message for the message may be received at block 707 from the device. The response message indicates an acknowledgement of the specific values.

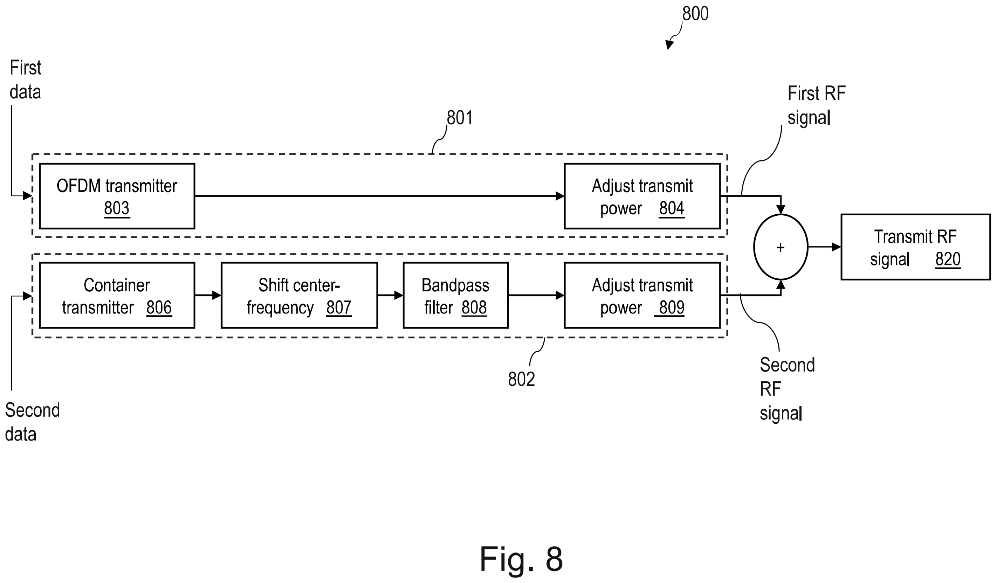

**FIG. 8** is a diagram illustrating an apparatus 800 in accordance with an example of the present subject matter. The diagram illustrates a process for generating and combining by the apparatus first and second radio frequency signals from two different transmission chains to produce a final radio frequency signal referred to as transmit RF signal 820.

The apparatus 800 comprises a first transmission chain 801 and a second transmission chain 802. The first transmission chain 801 may be configured to generate a first radio frequency signal from first data. For that, the first transmission chain 801 may comprise an OFDM transmitter 803 to generate an OFDM signal, which is then scaled for transmit power at block 804 to obtain the first radio frequency signal.

The second transmission chain 802 may be configured to generate a second radio frequency signal from second data. For that, the second transmission chain may comprise a container transmitter 806 to generate a second baseband waveform using a second waveform generation technique which may be different from the OFDM based waveform generation technique. The center frequency of the second baseband waveform (in time domain) may be shifted at block 807. A bandpass filter 808 may be applied on the shifted signal to isolate a specific frequency band. The shifted signal may be filtered to ensure that no leakage may occur, which might disturb the OFDM transmission. In an alternative example, the filtering may be done before the frequency shift using a low-pass filter. The filtered signal is then also scaled at block 809 for transmit power to obtain the second radio frequency signal. The combination of filtering and transmit power scaling in the second transmission chain 802 may ensure that the container transmitter cannot have a negative impact on the other communication signals. In particular, the filtering and scaling may ensure that the second baseband waveform produced by the container transmitter 806 is limited both in terms of frequency and transmit power. In an alternative example, the container transmitter 806 may be used without such a filter and scaling, e.g., when also the container transmission is utilizing OFDM modulation with similar numerology as in the primary OFDM transmission.

The difference in the first 801 and second transmission chains 802 may be explained as follows. The OFDM signal may contain the proper frequency content via nulling the unused subcarriers, whereas the second baseband waveform is a time domain signal on the baseband frequency in the most generic case (this may depend on the utilized mechanism for producing the container transmission). This means that the container transmission may need to be moved to the proper center-frequency with a frequency shift. This is typically a gap in the OFDM transmission, which has been nulled.

After power adjustments, the first and second radio frequency signals from both transmission chains are combined (as indicated by the '+' symbol) to create a composite signal i.e., transmit RF signal 820, which is then transmitted. For example, the two signals may be summed and consequently multiplexed in frequency to produce the final transmit signal.

This setup may allow for the coexistence and transmission of both an OFDM signal and a signal with a different waveform or frequency, potentially offering flexibility in accommodating various communication standards or services within the same transmission framework.

In **FIG. 9****,** a block circuit diagram illustrating a configuration of an apparatus 1070 is shown, wherein the apparatus 1070 is configured to implement at least part of the present subject matter. It is to be noted that the apparatus 1070 illustrated in FIG. 9 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 2 or 7.

For example, the processor 1071 is configured for: transmitting or receiving a radio frequency signal comprising a first radio frequency signal in a first time range and first frequency range, and a second radio frequency signal in a second time range and second frequency range, where the second time range includes the first time range, and the first and second frequency ranges are distinct; wherein the first radio frequency signal is obtained from a first baseband waveform; wherein the second radio frequency signal is obtained from a second baseband waveform, wherein a type of the first baseband waveform is different from a type of the second baseband waveform.

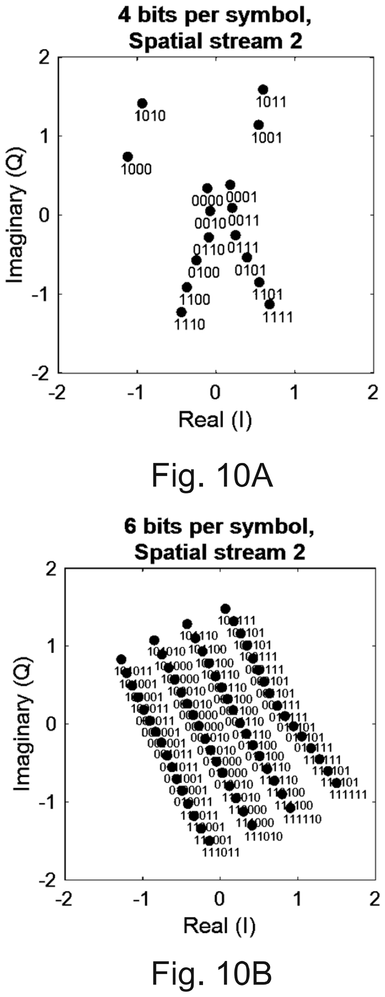

**FIG. 10A and FIG. 10B** depict examples of learned constellation shapes, that may be used in the second transmission chain for forming the second baseband waveform within the container. FIG. 10A shows the symbols which are obtained from the second data using a ML based modulation scheme with 4 bits per symbol.

FIG. 10B shows the symbols which are obtained from the second data using a ML based modulation scheme with 6 bits per symbol. These learned constellation shapes may be part of the second set of parameters, and they may be signaled to the user equipment, which may then transmit data within the container using these constellations.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus for a wireless communication system for transmission of first data and second data, the apparatus comprising at least one processor; and at least one memory storing instructions that, when executed by the at least one processor, cause the apparatus to:
transmit (201) to a device a radio frequency signal comprising: a first radio frequency signal, comprising the first data and covering a first time range and first frequency range, and a second radio frequency signal comprising the second data and covering a second time range and second frequency range, where the first time range includes the second time range, and the first and second frequency ranges are distinct;
wherein the first radio frequency signal is obtained from a first baseband waveform; wherein the second radio frequency signal is obtained from a second baseband waveform, wherein a type of the first baseband waveform is different from a type of the second baseband waveform.

2. The apparatus of claim 1, wherein the type of the first baseband waveform is defined by at least one of: a first waveform generation technique and first waveform parameters, wherein the type of the second baseband waveform is defined by at least one of: a second waveform generation technique and second waveform parameters.

3. The apparatus of any of the preceding claims, wherein execution of the instructions further causes the apparatus to perform a negotiation method with the device to agree on specific values of at least part of the second waveform parameters.

4. The apparatus of claim 3, wherein execution of the instructions further causes the apparatus to perform the negotiation method by at least:
receive from the device during a connection setup between the apparatus and the device capability information of the device;
use the capability information to determine whether the device supports a reception of the radio frequency signal;
in case the device supports a reception of the radio frequency signal, send a message to the device, the message indicating the specific values of the at least part of the second waveform parameters;
in response to sending the message, receive from the device a response message, the response message indicating an acknowledgement of the specific values.

5. The apparatus of claim 4, wherein execution of the instructions further causes the apparatus to perform the negotiation method by at least before sending the message:
send an initial message to the device, the initial message indicating possible values of the second waveform parameters;
receive an initial response message from the device indicating supported values of the second waveform parameters, wherein the specific values are selected from the supported values.

6. The apparatus of claim 4 or 5, wherein the message comprises a waveform index of predefined indexes, the waveform index indicating the specific values of the at least part of the second waveform parameters; or a bit vector representing the specific values of the at least part of the second waveform parameters.

7. The apparatus of any of the preceding claims 2 to 6, wherein execution of the instructions further causes the apparatus to adapt the second waveform generation technique one or more times.

8. The apparatus of any of the preceding claims 2 to 7, wherein the first waveform generation technique is the second waveform generation technique, wherein the second waveform parameters are different from the first waveform parameters.

9. The apparatus of any of the preceding claim 2 to 7, wherein the first waveform generation technique is different from the second waveform generation technique.

10. A method comprising:
transmitting (201) to a device a radio frequency signal comprising: a first radio frequency signal comprising first data and covering a first time range and first frequency range, and a second radio frequency signal comprising second data and covering a second time range and second frequency range, where the first time range includes the second time range, and the first and second frequency ranges are distinct;
wherein the first radio frequency signal is obtained from a first baseband waveform; wherein the second radio frequency signal is obtained from a second baseband waveform, wherein a type of the first baseband waveform is different from a type of the second baseband waveform.

11. The method of claim 10, wherein the type of the first baseband waveform is defined by at least one of: a first waveform generation technique and first waveform parameters, wherein the type of the second baseband waveform is defined by at least one of: a second waveform generation technique and second waveform parameters.

12. The method of any of the preceding claims 10 to 11, further comprising a negotiation method with the device to agree on specific values of at least part of the second waveform parameters.

13. The method of claim 12, the negotiation method comprising:
receiving from the device during a connection setup between an apparatus and the device capability information of the device;
using the capability information to determine whether the device supports a reception of the radio frequency signal;
in case the device supports a reception of the radio frequency signal,
sending a message to the device, the message indicating the specific values of the at least part of the second waveform parameters;
in response to sending the message, receiving from the device a response message, the response message indicating an acknowledgement of the specific values.

14. A computer program product comprising processor executable instructions for causing an apparatus for performing:
transmitting (201) to a device a radio frequency signal comprising: a first radio frequency signal comprising first data and covering a first time range and first frequency range, and a second radio frequency signal comprising second data and covering a second time range and second frequency range, where the first time range includes the second time range, and the first and second frequency ranges are distinct;
wherein the first radio frequency signal is obtained from a first baseband waveform; wherein the second radio frequency signal is obtained from a second baseband waveform, wherein a type of the first baseband waveform is different from a type of the second baseband waveform.

15. The computer program product of claim 14, wherein the type of the first baseband waveform is defined by at least one of: a first waveform generation technique and first waveform parameters, wherein the type of the second baseband waveform is defined by at least one of: a second waveform generation technique and second waveform parameters.
